# EUROPEAN PATENT APPLICATION

(11) **EP 4 554 164 A1**
(43) Date of publication of application: **14.05.2025**
(21) Application number: 23859177.0
(22) Date of filing: 18.08.2023
(51) Int. Cl.: H04L 41/0803

(54) **CONFIGURATION METHOD, MEDIUM, AND ELECTRONIC DEVICE**

(30) Priority: 30.08.2022 CN 202211046793
(71) Applicant: Huawei Technologies Co., Ltd., Shenzhen, Guangdong 518129 (CN)
(72) Inventor: LIU, Zhen, Shenzhen, Guangdong 518129 (CN); CHENG, Li, Shenzhen, Guangdong 518129 (CN)
(74) Representative: MERH-IP Matias Erny Reichl Hoffmann Patentanwälte PartG mbB
(86) International application number: PCT/CN2023/113735
(87) International publication number: WO 2024/046143

(57) **Abstract**

This application provides a configuration method, a medium, and an electronic device. The method is applied to a first smart device, and includes: obtaining device information of a to-be-configured device that enters a to-be-configured state, where the device information includes description information for obtaining configuration information; generating to-be-configured device description information that includes the device information of the to-be-configured device; sending the to-be-configured device description information to a mobile device; receiving the configuration information sent by the mobile device; and sending the configuration information to the corresponding to-be-configured device. According to the method in embodiments of this application, the mobile device does not need to establish a connection to and communicate with each to-be-configured device. This reduces communication time consumption, shortens user waiting time, and improves user experience.

## Description

The present invention claims priority to Chinese Patent Application No. 202211046793.1, filed with the China National Intellectual Property Administration on August 30, 2022 and entitled "CONFIGURATION METHOD, MEDIUM, AND ELECTRONIC DEVICE", which is incorporated herein by reference in its entirety.

### TECHNICAL FIELD

This application relates to the field of communication technologies, and in particular, to a configuration method, an apparatus, and an electronic device.

### BACKGROUND

A smart device needs to be registered before accessing a cloud server. Currently, a registration procedure of the smart device is complex, and all smart devices need to be registered one by one. A process in which a user configures the smart device to access a network is complex. Especially in an application scenario like a hotel, a whole house, or a home theater, when a large number of smart devices need to be configured, it takes a long time.

### SUMMARY

For a problem of how to simplify a configuration procedure of a smart device in the conventional technology, this application provides a configuration method, an apparatus, and an electronic device. This application further provides a computer-readable storage medium.

The following technical solutions are used in embodiments of this application.

According to a first aspect, a configuration method is provided. The method is applied to a first smart device, and the method includes:
obtaining device information of a to-be-configured device that enters a to-be-configured state, where the device information includes description information for obtaining configuration information, and the to-be-configured device that enters the to-be-configured state includes at least a second smart device; generating to-be-configured device description information that includes the device information of the to-be-configured device, where the to-be-configured device description information includes at least device information of the second smart device; sending the to-be-configured device description information to a mobile device; receiving the configuration information sent by the mobile device; and sending the configuration information to the corresponding to-be-configured device.

According to the method in the first aspect, the mobile device does not need to establish a connection to and communicate with each to-be-configured device. This reduces communication time consumption, shortens user waiting time, and improves user experience.

In an implementation of the first aspect, the obtaining device information of a to-be-configured device that enters a to-be-configured state includes: establishing a secure communication channel with the second smart device; receiving the device information of the second smart device based on the secure communication channel; and retaining the secure communication channel after the device information of the second smart device is received; and
the sending the configuration information to the corresponding to-be-configured device includes: sending, to the second smart device based on the secure communication channel, configuration information corresponding to the second smart device.

In the foregoing implementation, because the secure communication channel used to send the configuration information is established before the mobile device is connected to the first smart device, the first smart device does not need to re-establish the secure communication channel after receiving the configuration information sent by the mobile device. This saves establishment time of the secure communication channel, shortens waiting time for sending the configuration information, and improves configuration efficiency.

In an implementation of the first aspect, after the device information of the second smart device is received, the method further includes:
when the secure communication channel is disconnected and reconnection to the second smart device fails, deleting the device information of the second smart device from the to-be-configured device description information.

According to the foregoing implementations, it can be ensured that all to-be-configured devices in to-be-configured device description information in a to-be-configured device list are online devices, to prevent the mobile device from obtaining configuration information of an offline device, and prevent the mobile device from performing an unnecessary configuration information obtaining operation. This shortens configuration time consumption and improves configuration efficiency.

In an implementation of the first aspect, before the obtaining device information of a to-be-configured device that enters a to-be-configured state, the method further includes: determining the to-be-configured device that enters the to-be-configured state.

In an implementation of the first aspect, the determining the to-be-configured device that enters the to-be-configured state includes:
receiving a broadcast first message, and determining that the second smart device is the to-be-configured device that enters the to-be-configured state, where the first message includes information that the second smart device is the to-be-configured device that enters the to-be-configured state.

**In** an implementation of the first aspect, the determining the to-be-configured device that enters the to-be-configured state includes:
broadcasting a second message; and receiving a point-to-point connection request that is sent by the second smart device in response to the second message, and determining that the second smart device is the to-be-configured device that enters the to-be-configured state.

**In** an implementation of the first aspect, the sending the to-be-configured device description information to a mobile device includes:
receiving a configuration request sent by the mobile device; and
sending the to-be-configured device description information to the mobile device in response to the configuration request.

**In** an implementation of the first aspect, the configuration request includes a device limitation condition, and the device limitation condition is used to describe a configuration object of the mobile device; and the sending the to-be-configured device description information to the mobile device for configuration in response to the configuration request includes: selecting, from the to-be-configured device description information, device information of a to-be-configured device that meets the device limitation condition; and sending, to the mobile device, the device information of the to-be-configured device that meets the device limitation condition.

According to the foregoing implementations, the first smart device may be prevented from feeding back, to the mobile device, device information of the to-be-configured device that cannot be configured by the mobile device, and the mobile device may be prevented from performing an unnecessary configuration information obtaining operation. This shortens configuration time consumption and improves configuration efficiency.

**In** an implementation of the first aspect, the device information includes configuration requirement information, the configuration requirement information indicates specific content of a configuration operation to be performed for the to-be-configured device, and the configuration operation includes connecting to a router and/or cloud registration.

According to the foregoing implementations, the mobile device may be prevented from performing the unnecessary configuration information obtaining operation. This shortens configuration time consumption and improves configuration efficiency.

According to a second aspect, an embodiment further provides a configuration method. The method is applied to a mobile device, and the method includes:
obtaining to-be-configured device description information sent by a first smart device, where the to-be-configured device description information includes device information of a to-be-configured device, and the device information includes description information for obtaining configuration information; obtaining the configuration information based on the to-be-configured device description information; and sending the configuration information to the first smart device.

According to the method in the second aspect, the mobile device does not need to establish a connection to and communicate with each to-be-configured device. This reduces communication time consumption, shortens user waiting time, and improves user experience.

In an implementation of the second aspect, the obtaining to-be-configured device description information sent by a first smart device includes:
sending a configuration request to the first smart device; and receiving the to-be-configured device description information that is sent by the first smart device in response to the configuration request.

In an implementation of the second aspect, the configuration request includes a device limitation condition, and the device limitation condition is used to describe a configuration object of the mobile device.

According to the foregoing implementations, the first smart device may be prevented from feeding back, to the mobile device, device information of the to-be-configured device that cannot be configured by the mobile device, and the mobile device may be prevented from performing an unnecessary configuration information obtaining operation. This shortens configuration time consumption and improves configuration efficiency.

In an implementation of the second aspect, the obtaining the configuration information based on the to-be-configured device description information includes:
obtaining configuration information of a to-be-configured device that meets a configuration rule in the to-be-configured device corresponding to the to-be-configured device description information, where the configuration rule is used to describe a configuration object of the mobile device.

According to the foregoing implementations, the mobile device may be prevented from performing the unnecessary configuration information obtaining operation. This shortens configuration time consumption and improves configuration efficiency.

In an implementation of the second aspect, the obtaining the configuration information based on the to-be-configured device description information includes:
displaying device description of the to-be-configured device corresponding to the to-be-configured device description information to a user; requesting the user to select one or more to-be-configured devices from the to-be-configured device corresponding to the to-be-configured device description information; and obtaining configuration information of the to-be-configured devices selected by the user.

According to the foregoing implementations, the user specifies a to-be-configured device that needs to be configured, so that the mobile device may be prevented from performing the unnecessary configuration information obtaining operation. This shortens configuration time consumption and improves configuration efficiency. **In** addition, personalized configuration based on the user can be implemented, to improve user experience.

**In** an implementation of the second aspect, the device information includes configuration requirement information, and the configuration requirement information indicates specific content of a configuration operation to be performed for the to-be-configured device; and
the obtaining the configuration information based on the to-be-configured device description information includes:
obtaining the configuration information matching the configuration requirement information, where the configuration information includes router information and/or registration information.

According to the foregoing implementations, the mobile device may be prevented from performing the unnecessary configuration information obtaining operation. This shortens configuration time consumption and improves configuration efficiency.

**In** an implementation of the second aspect, the method further includes:
receiving a configuration result fed back by the first smart device or the to-be-configured device; and displaying the configuration result.

According to a third aspect, an embodiment of this application further provides an electronic device. The electronic device includes a memory configured to store computer program instructions and a processor configured to execute the computer program instructions, and when the computer program instructions are executed by the processor, the electronic device is triggered to perform the steps of the method according to the first aspect.

According to a fourth aspect, an embodiment of this application further provides an electronic device. The electronic device includes a memory configured to store computer program instructions and a processor configured to execute the computer program instructions, and when the computer program instructions are executed by the processor, the electronic device is triggered to perform the steps of the method according to the first aspect.

According to a fifth aspect, an embodiment of this application provides a computer-readable storage medium. The computer-readable storage medium stores a computer program, and when the computer program is run on a computer, the computer is enabled to perform the method according to the first aspect or the second aspect.

### BRIEF DESCRIPTION OF DRAWINGS

FIG. 1 is a diagram of an application scenario of device configuration according to an embodiment of this application;
FIG. 2 is a schematic flowchart of an application scenario of device configuration according to an embodiment of this application;
FIG. 3 is a diagram of an application scenario of device configuration according to an embodiment of this application;
FIG. 4 is a schematic flowchart of device configuration according to an embodiment of this application;
FIG. 5 is a schematic flowchart of interaction between a hub device and a to-be-configured device according to an embodiment of this application;
FIG. 6 is a schematic flowchart of interaction between a hub device and a to-be-configured device according to an embodiment of this application;
FIG. 7 is a diagram of a partial display interface of a mobile phone according to an embodiment of this application;
FIG. 8 is a diagram of a partial display interface of a mobile phone according to an embodiment of this application; and
FIG. 9 is a diagram of a structure of an electronic device according to an embodiment of this application.

### DESCRIPTION OF EMBODIMENTS

To make the objectives, technical solutions, and advantages of this application clearer, the following clearly and completely describes the technical solutions in this application with reference to specific embodiments and accompanying drawings in this application. It is clear that the described embodiments are merely some but not all of embodiments of this application. All other embodiments obtained by a person of ordinary skill in the art based on embodiments of this application without creative efforts shall fall within the protection scope of this application.

Terms used in implementations of this application are only used to explain specific embodiments of this application, but are not intended to limit this application.

For a problem of how to simplify a configuration procedure of a smart device in the conventional technology, this application provides a configuration method.

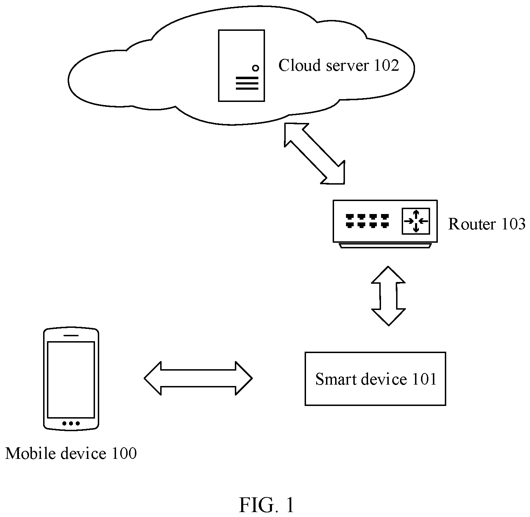

FIG. 1 is a diagram of a scenario of device configuration according to an embodiment of this application. As shown in FIG. 1, a user uses a mobile device 100 (for example, a mobile phone) to configure a to-be-configured smart device 101 (for example, a smart speaker). Specifically, a configuration operation may include: connecting the smart device 101 to a router 103; or connecting the smart device 101 to a router 103, and implementing cloud registration of the smart device 101 on a cloud server 102; or implementing cloud registration of the smart device 101 that has been connected to a router 103 on a cloud server 102.

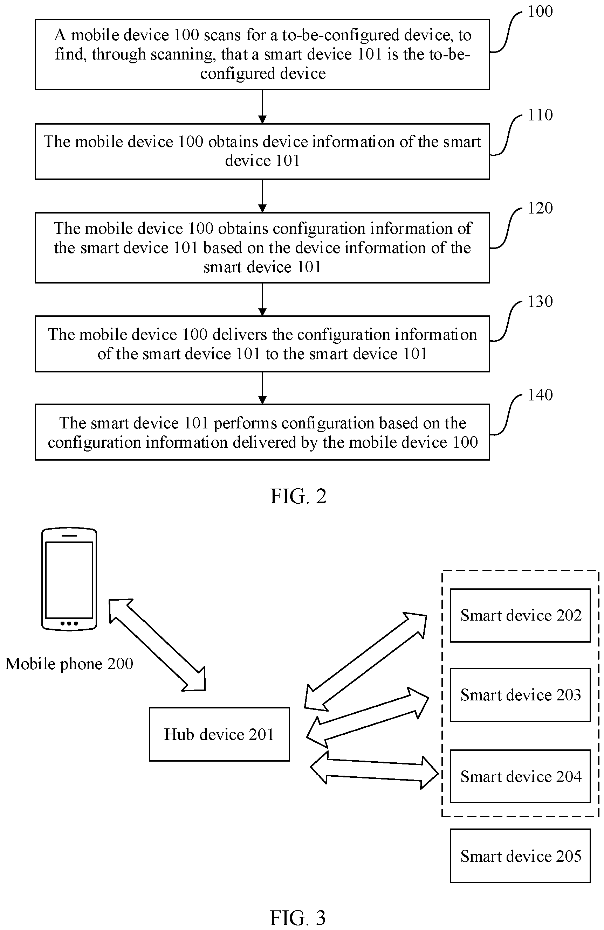

FIG. 2 is a schematic flowchart of device configuration according to an embodiment of this application. A mobile device 100 and a to-be-configured smart device 101 (for example, a smart speaker) perform the following procedure shown in FIG. 2 to implement configuration.

S100: The mobile device 100 scans for a to-be-configured device. For example, the to-be-configured device found through scanning is the smart device 101.

S110: The mobile device 100 obtains device information of the smart device 101.

S120: The mobile device 100 obtains configuration information of the smart device 101 based on the device information of the smart device 101.

In an embodiment, the device information of the smart device 101 includes description information (for example, a device ID, a logged-in user account on the device, a vendor to which the device belongs, and an application loaded on the device) for obtaining the configuration information of the smart device 101, and the configuration information includes configuration information corresponding to identity information of the smart device 101, for example, registration information (for example, a pre-shared key (PSK) and a device identifier (device ID)) for cloud registration of the smart device 101, and/or router information (for example, a wireless network name (SSID) and an access password) for connection when the smart device 101 accesses a network.

Specifically, in an embodiment, for the router information, the mobile device 100 obtains a wireless network name (SSID) selected by a user, and obtains an access password that is stored by the mobile device 100 and that is for the wireless network name (SSID) (or obtains an access password entered by the user).

In one embodiment, for the registration information, the mobile device 100 is connected to a cloud server 102, sends the device information of the smart device 101 to the cloud server 102, and requests the cloud server 102 to feed back the registration information of the smart device 101.

S130: The mobile device 100 delivers the configuration information of the smart device 101 to the smart device 101.

S140: The smart device 101 performs configuration based on the configuration information delivered by the mobile device 100.

Specifically, the smart device 101 is connected to the router 103 based on the router information (the wireless network name (SSID) and the access password) in the configuration information, and accesses the network. The smart device 101 is further connected to the cloud server by using the router 103 (or some smart devices that have a function of directly connecting to the cloud are directly connected to the cloud server 102), and registers with the cloud server 102 based on the registration information (the pre-shared key (PSK) and the device identifier (device ID)) in the configuration information.

In an application scenario in which there are a plurality of to-be-configured devices at the same time, the mobile device 100 needs to repeatedly perform S100 to S140 for each to-be-configured device.

To shorten configuration time consumption and improve configuration efficiency, in a scenario in which the plurality of to-be-configured devices exist at the same time, S100 and S 110 are concurrently performed for the plurality of to-be-configured devices, and S 140 is concurrently performed for the plurality of to-be-configured devices in a distributed manner.

Further, to shorten the configuration time consumption and improve the configuration efficiency, in an implementation of S120 and S 130, a plurality of tasks are concurrently performed, the plurality of tasks are simultaneously initiated in a background, and registration information of the plurality of to-be-configured devices is delivered in batches in a multi-thread manner. Specifically, in an embodiment, both the mobile device for configuration and the plurality of to-be-configured devices are set to a near field communication (for example, Bluetooth) manner; the configuration information is input on the mobile device for configuration, and the mobile device for configuration transmits the configuration information to each to-be-configured device in the near field communication manner; and each to-be-configured device performs wireless network connection with a wireless router based on the configuration information, and performs automatic configuration.

In the foregoing embodiment, configuration logic of the plurality of devices can be concurrently implemented to some extent. However, because the mobile device for configuration delivers the configuration information in the near field communication manner, and a connection process and a data transmission process of near field communication using Bluetooth data transmission as an example can only be performed in serial, information transmission processes are not strictly concurrent. Therefore, configuration efficiency is not fundamentally improved.

Further, if configuration is performed by using a Bluetooth channel, a quantity of Bluetooth connections is limited. Specifically, a quantity of a plurality of Bluetooth connections that are simultaneously maintained by the mobile phone is limited (for example, a maximum quantity of Bluetooth connections is limited to 6 in an Android system). Therefore, if there are a large quantity of to-be-configured devices, a multi-channel concurrency technology cannot achieve maximum efficiency improvement.

Further, in another implementation of S120 and S130, a local area network broadcast/multicast technology is used. Specifically, when the mobile device for configuration delivers the configuration information to the plurality of to-be-configured devices, to avoid that the mobile device is connected to the plurality of to-be-configured devices and long time is required for data transmission, the configuration information of the plurality of to-be-configured devices is directly broadcast to the to-be-configured devices in a broadcast/multicast manner, to indicate the plurality of to-be-configured devices to access the network and register with the cloud server based on registration information in the configuration information. In this implementation, the mobile device for configuration and the to-be-configured device are not directly connected, but directly transmit data in the broadcast/multicast manner. In this way, transmission efficiency is high. Configuration efficiency of the plurality of to-be-configured devices can be improved.

However, in a process of broadcasting the configuration information in the multicast/broadcast manner, because the broadcast information cannot strictly limit a receiver, for security purposes, to prevent an unauthorized device from receiving broadcast information including the configuration information, the mobile device for configuration strictly controls transmit power and broadcasts the configuration information in an ultra-short distance range (< 30 cm). However, there is a high probability that a distance is long after the plurality of to-be-configured devices are powered on, and the plurality of to-be-configured devices are not all near the mobile device used for configuration. Therefore, to configure the plurality of to-be-configured devices in batches in the broadcast manner, it needs to move the plurality of to-be-configured devices to one place for power-on, and after being configured, the devices are installed in their respective positions. The application scenarios are limited.

An embodiment of this application provides a configuration method. In the configuration method, a mobile device for configuration does not directly obtain device information of a to-be-configured device from the to-be-configured device (S100 and S110 are not performed), but a smart device (for example, a smart speaker) in a local area network in which the to-be-configured device is located obtains the device information of the to-be-configured device in the local area network, and the smart device sends the device information of the to-be-configured device to the mobile device for configuration.

FIG. 3 is a diagram of a scenario of device configuration according to an embodiment of this application.

As shown in FIG. 3, a mobile phone 200 is a mobile device for configuration. In another application scenario, the mobile device for configuration may alternatively be another type of mobile device like a notebook computer, a tablet computer, or a desktop computer. This is not limited in this application.

A hub device 201 is a smart device (a first smart device) used for auxiliary configuration, and the hub device 201 may separately communicate with smart devices 202 to 205 (for example, through a Bluetooth (BLE) or a wireless connection (Wi-Fi)). The hub device 201 may be any smart device, for example, a smart speaker, a smart refrigerator, a smart television, a mobile phone, or a tablet computer. This is not limited in this application.

**In** an actual scenario, any smart device may be specified as the smart device (the hub device) used for auxiliary configuration. This is not limited in this application. Specifically, the smart device used for auxiliary configuration is a rich device. The rich device (including a router, a speaker, or a large screen) is a smart device that has a complete hardware capability, can periodically scan surrounding to-be-configured devices, has connection capabilities of Wi-Fi, BLE, and the like, and can function as a relay role for proxy configuration.

For example, when creating a home local area network, a user may specify a smart speaker that has accessed the home local area network as the smart device (for example, the hub device 201) used for auxiliary configuration, and cooperate with a mobile device (for example, the mobile phone 200) to complete configuration of the smart speaker, configuration of another smart device that has currently accessed the home local area network, and configuration of another smart device that subsequently accesses the home local area network.

The smart devices 202 to 204 are to-be-configured devices, and the smart device 205 is a configured device. The smart devices 202 to 205 may be any smart device, for example, a smart speaker, a smart refrigerator, a smart television, a mobile phone, or a tablet computer. This is not limited in this application.

In the application scenario shown in FIG. 3, the to-be-configured devices are the smart devices 202 to 204. In another application scenario, the to-be-configured devices may be more or fewer smart devices. This is not limited in this application.

Further, the hub device 201 may be the to-be-configured device or may be the configured device. When the hub device 201 is the to-be-configured device, the hub device 201 also performs configuration in addition to cooperating with the mobile phone 200 to configure the smart devices 202 to 204.

The hub devices 201 to 205 may be any smart device or smart mobile device, for example, a smart speaker, a smart refrigerator, a smart television, a mobile phone, or a tablet computer. This is not limited in this application.

In the scenario shown in FIG. 3, the hub device 201 and the smart devices 202 to 205 are access devices in a local area network. In another scenario, an access device in a local area network may be another configured or unconfigured smart device. This is not limited in this application. For example, the hub device 201 and the smart devices 202 to 204 are access devices in a local area network, and all the access devices (the hub device 201 and the smart devices 202 to 204) in the local area network are the to-be-configured devices.

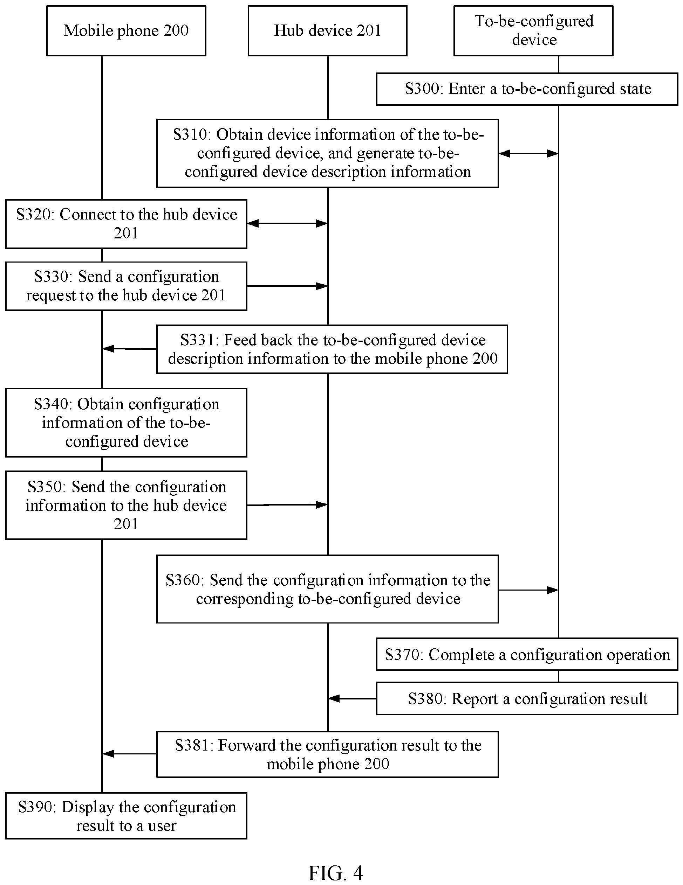

FIG. 4 is a schematic flowchart of device configuration according to an embodiment of this application. The devices shown in FIG. 3 perform the following procedure shown in FIG. 4 to implement device configuration.

S300: A to-be-configured device (one, or some, or all of the smart devices 202 to 204) enters a to-be-configured state.

The smart device 202 (a second smart device) is used as an example. In S300, after being powered on, the smart device 202 automatically enters the to-be-configured state. Alternatively, some devices need to be reset, or operated through physical buttons, to enter the to-be-configured state.

S310: The hub device 201 (a first smart device) determines the to-be-configured device that enters the to-be-configured state, obtains device information of the to-be-configured device (the smart devices 202 to 204) that enters the to-be-configured state, and generates to-be-configured device description information that includes the device information of the to-be-configured device.

For example, after the smart devices 202 to 204 enter the to-be-configured state, the to-be-configured device description information includes device information of the smart devices 202 to 204. Further, when the hub device 201 is the to-be-configured device, the to-be-configured device description information further includes device information of the hub device 201.

The hub device 201 may obtain the device information of the to-be-configured device in a plurality of different manners.

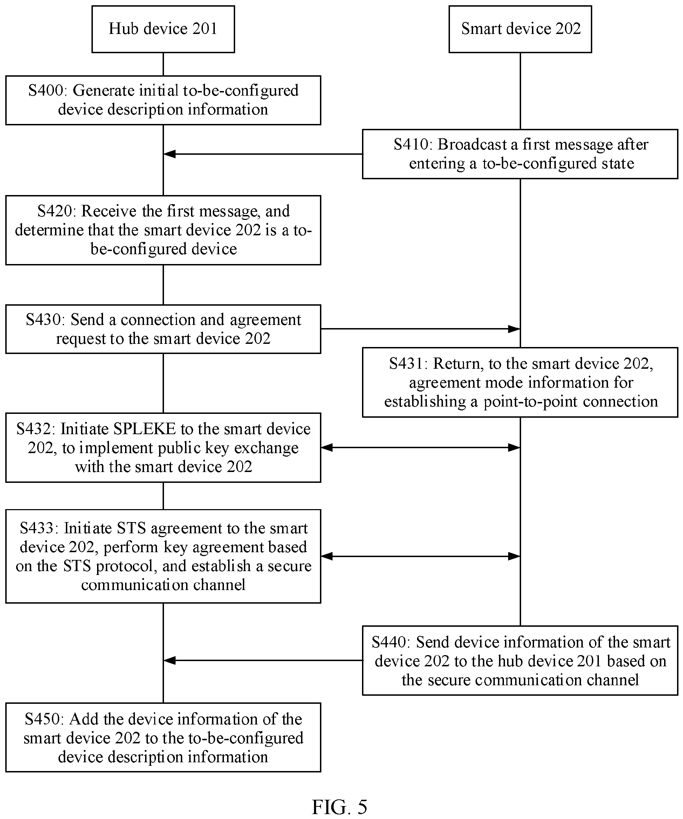

For example, FIG. 5 is a schematic flowchart of interaction between a hub device and a to-be-configured device according to an embodiment of this application.

In an implementation of S310, the smart device 202 is used as an example, and the hub device 201 and the smart device 202 perform the following procedure shown in FIG. 5.

S400: After being configured as the smart device used for auxiliary configuration, the hub device 201 generates the to-be-configured device description information and stores the to-be-configured device description information in the hub device 201, where content of initial to-be-configured device description information is empty.

S410: After entering the to-be-configured state, the smart device 202 broadcasts a first message, where the first message includes information that the smart device 202 is the to-be-configured device that enters the to-be-configured state.

In an embodiment, the smart device 202 broadcasts the first message, where a broadcast manner of the first message may be a wireless point-to-point network (Wi-Fi P2P) manner or a Bluetooth low energy (BLE) manner. For example, after being powered on, the smart device 202 having a Bluetooth communication module broadcasts configuration request information in a Bluetooth low energy manner.

Specifically, in an embodiment, after entering the to-be-configured state, the smart device 202 cyclically broadcasts the first message. The hub device 201 performs polling scanning at a fixed time interval to discover the smart device 202.

**In** another embodiment, after entering the to-be-configured state, the smart device 202 periodically broadcasts the first message at a preset time interval. The hub device 201 performs continuous broadcast monitoring to discover the smart device 202.

**In** another embodiment, after entering the to-be-configured state, the smart device 202 periodically broadcasts the first message at a preset time interval, and duration in which the smart device 202 cyclically sends configuration request information in each period is first duration. The hub device 201 performs polling scanning at a fixed time interval to discover the smart device 202. The time interval of polling scanning by the hub device 201 is less than the first duration, to ensure that the hub device 201 performs one polling scanning during a period in which the smart device 202 cyclically sends the first message.

S420: After receiving the first message broadcast by the smart device 202, the hub device 201 determines, based on the first message, that the smart device 202 is the to-be-configured device.

After the hub device 201 determines that the smart device 202 is the to-be-configured device, the hub device 201 establishes a point-to-point connection to the smart device 202, obtains device information of the smart device 202, and adds the device information of the smart device 202 to the to-be-configured device description information.

Specifically, in an embodiment, the hub device 201 and the smart device 202 perform S430 to S433 to establish a point-to-point connection. In another embodiment, the hub device 201 and the smart device 202 may alternatively establish a point-to-point connection in another manner.

S430: The hub device 201 sends a connection and agreement request to the smart device 202, to establish a point-to-point connection to the smart device 202.

S431: After receiving the connection and agreement request of the hub device 201, the smart device 202 stops broadcasting the configuration request information, enters a working mode, and returns, to the smart device 202, agreement mode information for establishing a point-to-point connection, where the agreement mode information includes an encryption manner supported by the smart device 202 and point-to-point connection protocol information.

S432: The hub device 201 initiates simple password exponential key exchange (Simple Password Exponential Key Exchange, SPLEKE) to the smart device 202 based on the agreement mode information, to implement public key exchange between the hub device 201 and the smart device 202.

S433: After completing public key exchange, the hub device 201 initiates STS agreement to the smart device 202, performs key agreement based on the STS protocol, and establishes a secure communication channel.

S440: The smart device 202 sends the device information of the smart device 202 to the hub device 201 based on the secure communication channel.

S450: The hub device 201 adds the device information of the smart device 202 to the to-be-configured device description information.

After S440, the secure communication channel between the hub device 201 and the smart device 202 is retained, to perform a subsequent configuration operation.

Further, in an embodiment, after S440, the smart device 202 does not broadcast the first message anymore when the secure communication channel is maintained between the hub device 201 and the smart device 202. When the smart device 202 has not completed configuration, and the secure communication channel between the hub device 201 and the smart device 202 is disconnected and cannot be reconnected, the smart device 202 restarts to broadcast the first message.

For example, after the smart device 202 establishes the secure communication channel with the hub device 201, the smart device 202 is unexpectedly powered off (the secure communication channel between the smart device 202 and the hub device 201 is disconnected) when the smart device 202 has not completed configuration. After being powered on again, the smart device 202 restarts to broadcast the configuration request information, to establish a secure communication channel with the hub device 201 again.

For another example, after the smart device 202 establishes the secure communication channel with the hub device 201, the hub device 201 is unexpectedly powered off (the secure communication channel between the smart device 202 and the hub device 201 is disconnected) when the smart device 202 has not completed configuration. The smart device 202 starts to broadcast the first message again, so that the hub device 201 is powered on again and establishes a secure communication channel with the hub device 201 again.

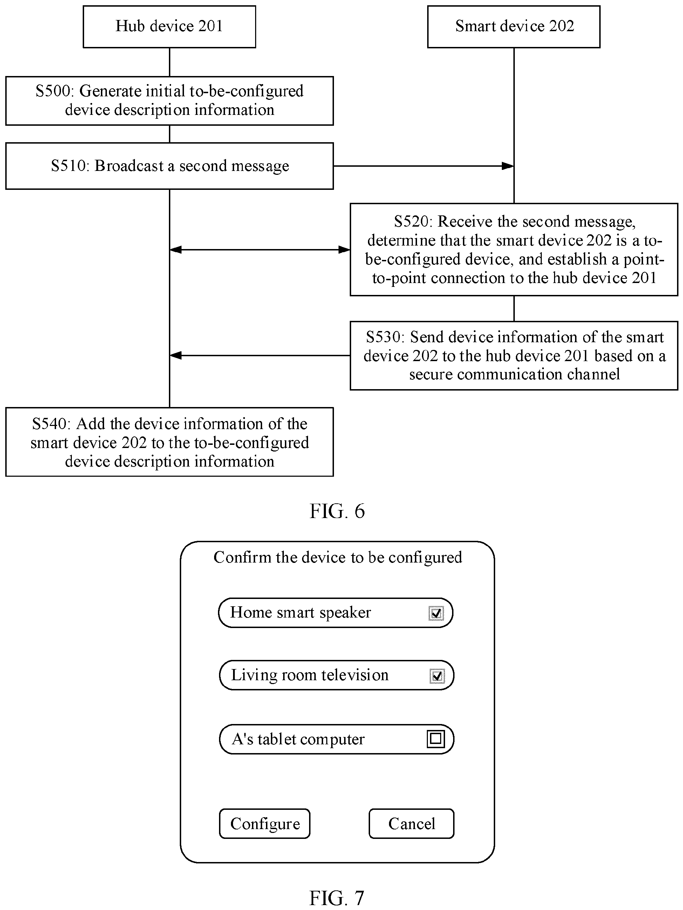

For another example, FIG. 6 is a schematic flowchart of interaction between a hub device and a to-be-configured device according to an embodiment of this application.

**In** another implementation of S310, the smart device 202 is used as an example, and the hub device 201 and the smart device 202 perform the following procedure shown in FIG. 6.

S500: Refer to S400.

S510: The hub device 201 broadcasts a second message.

A broadcast manner of the second message may be a wireless point-to-point network (Wi-Fi P2P) manner or a Bluetooth low energy (BLE) manner. Refer to S410.

Specifically, in an embodiment, the hub device 201 cyclically broadcasts the second message. After entering the to-be-configured state, the smart device 202 performs polling scanning at a fixed time interval to receive the second message.

In another embodiment, the hub device 201 periodically broadcasts the second message at a preset time interval. After entering the to-be-configured state, the smart device 202 performs continuous broadcast monitoring to receive the second message.

In another embodiment, the hub device 201 periodically broadcasts the second message at a preset time interval, and duration for cyclically sending the second message by the hub device 201 in each period is second duration. After entering the to-be-configured state, the smart device 202 performs polling scanning at a fixed time interval to receive the second message. The time interval of polling scanning by the smart device 202 is less than the second duration, to ensure that the hub device 201 performs one polling scanning during a period in which the hub device 201 cyclically sends the second message.

S520: After receiving the second message and determining that the smart device 202 is the to-be-configured device, the smart device 202 requests to establish a point-to-point connection to the hub device 201. After receiving a point-to-point connection request that is sent by the smart device 202 in response to the second message, the hub device 201 determines that the smart device 202 is the to-be-configured device that enters the to-be-configured state.

For a process of establishing the point-to-point connection, refer to S430 to S433.

For S530 and S540, refer to S440 and S450.

After S530, the secure communication channel between the hub device 201 and the smart device 202 is retained for a subsequent configuration operation.

Further, in an embodiment, after S530, when a secure communication channel is maintained between the hub device 201 and the smart device 202, the smart device 202 does not perform polling scanning or perform broadcast monitoring on a resident local area network. When the smart device 202 has not completed configuration, when the secure communication channel between the hub device 201 and the smart device 202 is disconnected and cannot be reconnected, the smart device 202 re-starts polling scanning or performs continuous broadcast monitoring.

For example, after the smart device 202 establishes the secure communication channel with the hub device 201, the smart device 202 is unexpectedly powered off (the secure communication channel between the smart device 202 and the hub device 201 is disconnected) when the smart device 202 has not completed configuration. After the smart device 202 is powered on again and accesses the local area network, the smart device 202 restarts polling scanning or performs continuous broadcast monitoring, to establish a secure communication channel with the hub device 201 again.

For another example, after the smart device 202 establishes the secure communication channel with the hub device 201, the hub device 201 is unexpectedly powered off (the secure communication channel between the smart device 202 and the hub device 201 is disconnected) when the smart device 202 has not completed configuration. The smart device 202 restarts polling scanning or performs continuous broadcast monitoring, so that the hub device 201 establishes a secure communication channel with the hub device 201 again when the hub device 201 is powered on again.

Further, because the second message in S510 is sent in a broadcast manner, after S510, the device that receives the second message may not be the to-be-configured device. For example, a device receiving the second message is a configured device (the smart device 205), or a device receiving the second message is a device that does not allow batch configuration by using the hub device 201 (for example, based on a security requirement, some smart devices need be separately configured by the user).

In an embodiment, when the device receiving the second message may not be the to-be-configured device, the device receiving the second message does not respond to the second message.

Further, in an embodiment, after S450 or S540, the hub device 201 monitors a status of the secure communication channel between the hub device 201 and the smart device 202. When the smart device 202 has not completed configuration, when the secure communication channel between the hub device 201 and the smart device 202 is disconnected and cannot be reconnected, the hub device 201 deletes the device information of the smart device 202 in the to-be-configured device description information, to ensure that all devices in the to-be-configured device description information are online devices, prevent the mobile phone 200 from obtaining configuration information of an offline device, prevent the mobile phone 200 from performing an unnecessary configuration information obtaining operation, and improve configuration efficiency.

Further, in an embodiment, after S450 or S540, when the secure communication channel is maintained between the hub device 201 and the smart device 202, if the smart device 202 is switched to a non-to-be-configured device (for example, the smart device 202 completes configuration in another manner during the maintenance of the secure communication channel, or the smart device 202 is set to be unable to perform batch configuration based on the hub device 201 during the maintenance of the secure communication channel), the smart device 202 sends a configuration notification message to the hub device 201. After receiving the configuration notification message of the smart device 202, the hub device 201 deletes the device information of the smart device 202 from the to-be-configured device description information, and sends an acknowledgment message to the smart device 202. After receiving the acknowledgment message, the smart device 202 disconnects the secure communication channel between the smart device 202 and the hub device 201.

Further, to avoid connection timeout caused by maintaining a point-to-point connection between the hub device 201 and the to-be-configured device for a long time, in an embodiment, the hub device 201 actively releases the point-to-point connection to the to-be-configured device based on a preset time interval, and then the hub device 201 re-establishes a point-to-point connection to the to-be-configured device based on the foregoing procedure of S400 to S440 or S500 to S530, to reset a connection status of the point-to-point connection between the hub device 201 and the to-be-configured device.

Further, to avoid mismatch between recorded content and an actual device status caused by that the to-be-configured device description information is not updated for a long time, in an embodiment, the hub device 201 clears the to-be-configured device description information while actively releasing the point-to-point connection to the to-be-configured device. After reestablishing the point-to-point connection to the to-be-configured device, the hub device 201 readds the to-be-configured device description information to the description information of the to-be-configured device.

When the user performs configuration for the to-be-configured device, the mobile phone 200 performs S320.

S320: The mobile phone 200 is connected to the hub device 201.

Specifically, the mobile phone 200 may discover the hub device 201 through device scanning, or the user may perform an operation on the mobile phone 200, to specify that the mobile phone 200 is connected to the hub device 201. Then, the mobile phone 200 directly establishes a point-to-point connection to the hub device 201.

S330: The mobile phone 200 sends a configuration request to the hub device 201.

S331: After receiving the configuration request, the hub device 201 feeds back the to-be-configured device description information to the mobile phone 200.

Specifically, in an implementation, after receiving the configuration request, the hub device 201 feeds back complete to-be-configured device description information to the mobile phone 200. For example, the to-be-configured device description information includes device information of the smart devices 202 to 204.

Further, in an actual scenario, not all to-be-configured devices can be configured by using the mobile phone 200. For example, some to-be-configured devices are set to be configured by using a mobile device bound to the to-be-configured devices. For another example, the mobile phone 200 is set to be configured only for to-be-configured devices that are logged in by using some user accounts. For another example, for some to-be-configured devices, for security purposes, configuration information of the to-be-configured devices cannot be forwarded by the hub device 201. If the hub device 201 feeds back all the description information of the to-be-configured device to the mobile phone 200, the mobile phone 200 may request to obtain configuration information for a to-be-configured device that cannot be configured by the mobile phone 200, causing a failure in obtaining the configuration information; or the mobile phone 200 obtains device information and configuration information of a to-be-configured device that the mobile phone 200 does not have a configuration permission.

For the foregoing problem, in another implementation, the configuration request includes a device limitation condition, and the device limitation condition is used to describe a configuration object of the mobile phone 200. For example, the device limitation condition includes a device type, and the device type in the device limitation condition is used to describe a type of a to-be-configured device currently configured for the mobile phone 200. For another example, the device limitation condition includes a device function, and the device function in the device limitation condition is used to describe a function of the to-be-configured device currently configured for the mobile phone 200. For another example, the device limitation condition includes a device list, and the device list in the device limitation condition indicates that only to-be-configured devices included in the device list are currently configured for the mobile phone 200.

After receiving the configuration request, the hub device 201 selects, from the to-be-configured device description information, the device information of the to-be-configured device that meets the device limitation condition, and sends the device information of the to-be-configured device that meets the device limitation condition to the mobile phone 200.

In this way, the hub device 201 can be prevented from feeding back, to the mobile phone 200, the device information of the to-be-configured device that cannot be configured by the mobile phone 200, and the mobile phone 200 can be prevented from performing an unnecessary configuration information obtaining operation. This shortens configuration time consumption and improves configuration efficiency.

For example, the device limitation condition included in the configuration request is an audio and video device (for example, a smart speaker or a smart television). After receiving the configuration request, the hub device 201 feeds back device information of all audio and video devices in the to-be-configured device description information to the mobile phone 200.

For another example, the device limitation condition included in the configuration request is a communication device (for example, a smart speaker, a smart television, or a smart refrigerator that has a communication function). After receiving the configuration request, the hub device 201 feeds back device information of all communication devices in the to-be-configured device description information to the mobile phone 200.

A procedure (S310) in which the hub device 201 obtains the device information in the to-be-configured device description information may be completed in advance before S330. In addition, in S331, the hub device 201 feeds back, to the mobile phone 200, the to-be-configured device description information that includes the device information of the to-be-configured device, instead of determining the to-be-configured device one by one and obtaining the device information of the to-be-configured device. Therefore, a procedure of performing a configuration operation by the mobile phone 200 is simplified (a procedure of obtaining the device information of the to-be-configured device by the mobile phone 200 is simplified), time consumed for performing the configuration operation by the mobile phone 200 is shortened, configuration efficiency is improved, user waiting time is shortened, and user experience is improved.

S340: The mobile phone 200 obtains the configuration information of the to-be-configured device based on the device information in the to-be-configured device description information fed back by the hub device 201. (Refer to S120.)

In an embodiment, in S340, the mobile phone 200 obtains, based on the device information of the smart devices 202 to 204 fed back by the hub device 201, registration information (pre-shared key (PSK) and device identifiers (device ID)) required by the smart devices 202 to 204 during cloud registration, and information (wireless network name (SSID) and access password) about a router to which the smart devices 202 to 204 need to connect when accessing a network.

Specifically, in an implementation of S340, the mobile phone 200 obtains configuration information of each to-be-configured device in the to-be-configured device description information fed back by the hub device 201.

For example, when the to-be-configured device description information fed back by the hub device 201 includes the device information of the smart devices 202 to 204, the mobile phone 200 obtains the configuration information of the smart devices 202 to 204.

Further, in an actual scenario, not all to-be-configured devices can be configured by using the mobile phone 200. For example, some to-be-configured devices are set to be configured by using a mobile device bound to the to-be-configured devices. For another example, the mobile phone 200 is set to be configured only for to-be-configured devices that are logged in by using some user accounts. For another example, for some to-be-configured devices, for security purposes, configuration information of the to-be-configured devices cannot be forwarded by the hub device 201. If the mobile phone 200 obtains the configuration information of each to-be-configured device included in the to-be-configured device description information a case in which configuration information of some to-be-configured devices cannot be obtained (the configuration information fails to be obtained) may occur, or a case in which the configuration information is obtained illegally occurs.

For the foregoing problem, in another implementation of S340, a configuration rule is preset in the mobile phone 200, and the configuration rule is used to describe a configuration object of the mobile phone 200. For example, the configuration rule includes a device type, and the device type in the configuration rule is used to describe a type of to-be-configured device currently configured for the mobile phone 200. For another example, the configuration rule includes a device function, and the device function in the configuration rule is used to describe a function of the to-be-configured device currently configured for the mobile phone 200. For another example, the configuration rule includes a device list, and the device list in the configuration rule indicates that only to-be-configured devices included in the device list are currently configured for the mobile phone 200.

The mobile phone 200 needs to obtain only the configuration information of the to-be-configured device that meets the configuration rule, thereby improving a speed of obtaining the configuration information by the mobile phone 200, and reducing a probability that the mobile phone 200 fails to obtain the configuration information. Further, the mobile phone 200 does not feed back configuration information of the to-be-configured device that does not meet the configuration rule to the hub device 201, thereby improving security of the configuration information.

For example, the configuration rule is an audio and video device (for example, a smart speaker or a smart television), and the to-be-configured device description information sent by the hub device 201 includes device information of the smart speaker, the smart television, a smart air conditioner, and a smart lamp. The mobile phone 200 obtains only configuration information of audio and video devices (a smart speaker and a smart television) in the mobile phone 200.

For another example, the configuration rule is a communication device (for example, a smart speaker, a smart television, or a smart refrigerator that has a communication function), and the to-be-configured device description information sent by the hub device 201 includes device information of the smart speaker, the smart television, the smart air conditioner, and the smart lamp. The mobile phone 200 obtains only configuration information of communication devices (a smart speaker and a smart television) in the mobile phone 200.

In another implementation of S340, the mobile phone 200 displays, to the user based on the to-be-configured device description information fed back by the hub device 201, device description of all to-be-configured devices included in the to-be-configured device description information (for example, the device description includes one or more of a device name, a device type, a user to which the device belongs, and a device login status). The user selects a to-be configured device that needs to be configured. The mobile phone 200 obtains configuration information of a to-be-configured device selected by the user.

The user specifies the to-be-configured device that needs to be configured, so that the mobile device can be prevented from performing an unnecessary configuration information obtaining operation. This shortens configuration time consumption and improves configuration efficiency. In addition, personalized configuration based on the user can be implemented, to improve user experience.

For example, FIG. 7 is a diagram of a partial display interface of a mobile phone according to an embodiment of this application.

When the to-be-configured device description information fed back by the hub device 201 includes the device information of the smart devices 202 to 204, the mobile phone 200 displays interface content shown in FIG. 7 to the user. A home smart speaker, a living room television, and A's tablet computer are respectively device names of the smart devices 202 to 204 (the mobile phone 200 obtains the foregoing device names based on the device information of the smart devices 202 to 204).

Currently, the user wants to perform batch configuration on the home smart speaker and the living room television (the smart devices 202 and 203). For A's tablet computer (the smart device 204), the user expects to separately configure subsequently. Therefore, the user selects the home smart speaker (check box 601) and the living room television (check box 602), and taps a "Configure" button.

The mobile phone 200 obtains configuration information of the smart speaker and the living room television (the smart devices 202 and 203) based on the device information of the smart speaker and the living room television (the smart devices 202 and 203) in the to-be-configured device description information.

When the user wants to give up this configuration, the user taps a "Cancel" button.

S350: The mobile phone 200 sends the configuration information of the to-be-configured device obtained in S340 to the hub device 201.

For example, in an embodiment, in S350, the mobile phone 200 sends, to the hub device 201, registration information (a pre-shared key (PSK) and a device identifier (device ID)) required by the smart devices 202 to 204 during cloud registration and information (a wireless network name (SSID) and an access password) about a router to which the smart devices 202 to 204 need to connect when accessing a network.

In S330, S331, and S350, the mobile phone 200 needs to establish a connection to and communicate with only one device (the hub device 201) in the local area network, and the mobile phone 200 does not need to establish a connection to and communicate with each to-be-configured device. This reduces communication time consumption, shortens user waiting time, and improves user experience.

S360: The hub device 201 sends the configuration information of the to-be-configured device to the corresponding to-be-configured device based on the secure communication channel preestablished between the hub device 201 and the to-be-configured device.

For example, in S350, the configuration information sent by the mobile phone 200 to the hub device 201 includes the configuration information of the smart device 202, and the configuration information includes a device identifier of the smart device 202. After receiving the configuration information of the smart device 202, the hub device 201 invokes, based on the device identifier of the smart device 202, the secure communication channel that is established between the hub device 201 and the smart device 202 in S310, and sends the configuration information of the smart device 202 to the smart device 202.

In S360, because the secure communication channel used to send the configuration information is established in S310, after receiving the configuration information sent by the mobile phone 200, the hub device 201 does not need to re-establish a secure communication channel. This saves establishment time of the secure communication channel, shortens waiting time for sending the configuration information, and improves configuration efficiency.

S370: After receiving the configuration information of the to-be-configured device, the to-be-configured device completes a configuration operation based on the configuration information. Refer to S140.

After the to-be-configured device completes configuration, the to-be-configured device reports a configuration result to the mobile device.

Specifically, in an implementation, a procedure in which the smart device 202 reports a configuration result includes:
S380: After completing configuration, the to-be-configured device (the smart devices 202 to 204) reports a configuration result to the hub device 201 by using a secure communication channel through which the configuration information is received.
S381: The hub device 201 forwards the configuration result to the mobile phone 200.

The hub device 201 may immediately forward the configuration result to the mobile phone 200 after receiving a configuration result of a to-be-configured device. Alternatively, after receiving configuration results of all the to-be-configured devices, the hub device 201 may uniformly forward the configuration results of all the to-be-configured devices to the mobile phone 200.

Further, in another implementation, the configuration information sent by the mobile phone 200 to the hub device 201 includes device information of the mobile phone 200. After completing configuration, the to-be-configured devices (the smart devices 202 to 204) connect to the mobile phone 200 based on the configuration information, and report the configuration result to the mobile phone 200.

Further, in another implementation, after the to-be-configured device successfully completes cloud registration, the cloud server feeds back registration success information of a successfully registered to-be-configured device to the mobile phone 200.

Further, the configuration result includes a configuration success and a configuration failure. In an embodiment, for an implementation in which the hub device 201 receives the configuration result, after the hub device 201 sends the configuration information to the smart device 202, if the hub device 201 does not receive, within a first preset time threshold, configuration success feedback information fed back by the smart device 202, the hub device 201 determines that the configuration of the smart device 202 fails, and then the hub device 201 feeds back the configuration failure of the smart device 202 to the mobile phone 200.

In another embodiment, for an implementation in which the mobile phone 200 receives the configuration result, after the mobile phone 200 sends the configuration information to the hub device 201, if the mobile phone 200 does not receive, within a second preset time threshold, the configuration success feedback information fed back by the smart device 202, the mobile phone 200 determines that the configuration of the smart device 202 fails. In an implementation in which the mobile phone 200 receives the configuration result, the smart device 202 needs to establish a connection to the mobile phone 200 before feeding back the configuration result to the mobile phone 200, and the second preset time threshold is greater than the first time threshold.

S390: The mobile phone 200 displays the configuration result to the user.

Further, the configuration result further includes a configuration status and/or a configuration failure cause.

For example, the configuration status and the configuration failure cause include: a router connection failure (invalid SSID), a router connection failure (incorrect access password), a cloud registration failure (invalid device identifier), and a cloud registration failure (incorrect registration password).

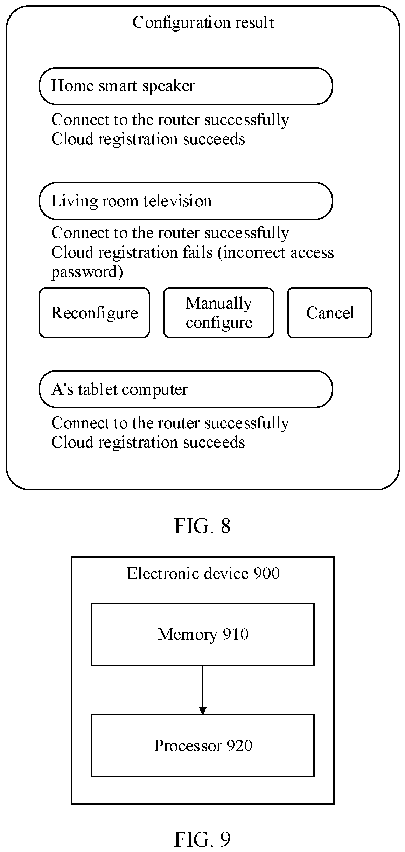

For example, FIG. 8 is a diagram of a partial display interface of a mobile phone according to an embodiment of this application.

As shown in FIG. 8, the mobile phone 200 displays that a home smart speaker (a smart device 202) is successfully connected to a router/cloud registration succeeds (configuration succeeds), a living room television (a smart device 203) is successfully connected to a router/cloud registration fails (an access password is incorrect), and A's tablet computer is successfully configured.

Further, for the living room television (the smart device 203) that fails to be configured, a "Cancel" button, a "Reconfigure" button, and a "Manually configure" button are provided below a configuration result of the living room television (the smart device 203).

The user taps the "Cancel" button, and ignores the living room television (the smart device 203) in this configuration procedure.

After the user taps the "Reconfigure" button, in an implementation, the mobile phone 200 re-obtains the configuration information based on the device information of the smart device 203 that is previously sent by the hub device 201. Because the living room television (the smart device 203) is successfully connected to the router/cloud registration fails (the access password is incorrect), the mobile phone 200 re-obtains a registration password used during cloud registration of the smart device 203. Then, the mobile phone 200 sends, to the hub device 201, the registration password used during the cloud registration of the smart device 203, and the hub device 201 sends, to the smart device 203, the registration password used during the cloud registration of the smart device 203.

After the user taps the "Reconfigure" button, in another implementation, the mobile phone 200 requests the hub device 201 to re-obtain the device information of the smart device 203. Because the living room television (the smart device 203) is successfully connected to the router/cloud registration fails (the access password is incorrect), the mobile phone 200 requests the hub device 201 to re-obtain device information used by the smart device 203 for cloud registration. The hub device 201 sends, to the mobile phone 200, the re-obtained device information that is of the smart device 203 and that is used for cloud registration. The mobile phone 200 re-obtains, based on the device information of the smart device 203 that is sent by the hub device 201, a registration password of the smart device 203 during cloud registration. Then, the mobile phone 200 sends, to the hub device 201, the registration password used during the cloud registration of the smart device 203, and the hub device 201 sends, to the smart device 203, the registration password used during the cloud registration of the smart device 203.

After the user taps the "Manually configure" button (703), the mobile phone 200 establishes a point-to-point connection to the smart device 203, and the user manually performs configuration for the smart device 203 (refer to S110 to S140).

Further, in the application scenario of the foregoing embodiment, the to-be-configured devices (the smart devices 202 to 204) are smart devices that are not connected to the router. For configuration operations of the smart devices 202 to 204, the smart devices 202 to 204 need to be configured to connect to the router and register with the cloud.

In another scenario, one or more of the to-be-configured devices may have been connected to a router, and a configuration operation is not used to configure the to-be-configured devices to be connected to the router, and only used to configure the to-be-configured devices to register with the cloud server.

In another application scenario, although one or more of the to-be-configured devices are not connected to the router, a configuration operation is not used to configure the to-be-configured devices to be registered with the cloud server, and only used to configure the to-be-configured devices to be connected to the router.

Specifically, in an embodiment, for a to-be-configured device that has been connected to the router (connected to the local area network), the hub device 201 accesses the same router (or the local area network), to establish a connection to the to-be-configured device and obtain device information.

Further, in an implementation, the device information in the to-be-configured device description information further includes configuration requirement information of the to-be-configured device (the device information sent by the to-be-configured device to the hub device 201 includes configuration requirement information of the to-be-configured device), and the configuration requirement information indicates specific content of a configuration operation to be performed for the to-be-configured device.

In S340, the mobile phone 200 obtains corresponding configuration information based on the configuration requirement information in the device information. In this way, the mobile phone 200 can be prevented from performing an unnecessary configuration information obtaining operation. This shortens configuration time consumption and improves configuration efficiency.

For example, in an embodiment, the configuration requirement information indicates that the smart device 202 has been connected to the router (the smart device 202 has obtained a wireless network name (SSID) and an access password in a previous configuration operation), and the smart device 202 currently needs to be registered with the cloud server. In S340, the mobile phone 200 requests the cloud server to obtain registration information (cloud registration code) of the smart device 202, and the cloud server returns the registration information of the smart device 202 to the mobile phone 200.

For another example, in an embodiment, the configuration requirement information indicates that the smart device 202 is not connected to the router, and the smart device 202 does not need to be registered with the cloud server. In S340, the mobile phone 200 obtains a wireless network name and an access password of a wireless router to be accessed by the smart device 202.

For another example, in an embodiment, the configuration requirement information indicates that the smart device 202 is not connected to the router, and the smart device 202 further needs to be registered with the cloud server. In S340, the mobile phone 200 obtains a wireless network name and an access password of a wireless router to be accessed by the smart device 202; and the mobile phone 200 requests the cloud server to obtain registration information (cloud registration code) of the smart device mobile phone 200, and the cloud server returns the registration information of the smart device 202 to the mobile phone 200.

In the description of embodiments of this application, when a hardware device performs a method procedure, various modules configured to implement functions of the method procedure may be constructed in the hardware device. Module division is merely logical function division. When embodiments of this application are implemented, functions of the modules may be implemented in one or more pieces of software and/or hardware.

Specifically, during actual implementation, all or some of the functional modules may be integrated into one physical entity, or may be physically separated. In addition, the modules may be all implemented in a form of software invoking processing elements; or the modules may be all implemented in a form of hardware; or some modules may be implemented in a form of software invoking processing elements, and some modules may be implemented in a form of hardware. For example, a detection module may be an independently disposed processing element, or may be integrated in one chip of an electronic device for implementation. Implementations of other modules are similar. In addition, all or some of the modules may be integrated, or may be implemented independently. In an implementation process, steps in the foregoing methods or the foregoing modules can be implemented by using a hardware integrated logical circuit in the processing element, or by using instructions in a form of software.

For example, the foregoing modules may be configured as one or more integrated circuits for implementing the foregoing method, for example, one or more application-specific integrated circuits (Application-Specific Integrated Circuits, ASICs), one or more digital signal processors (Digital Signal Processors, DSPs), or one or more field programmable gate arrays (Field Programmable Gate Arrays, FPGAs). For another example, these modules may be integrated together and implemented in a form of a system-on-a-chip (System-On-a-Chip, SOC).

An embodiment of this application further provides an electronic device (for example, a mobile device 100 or a mobile phone 200).

FIG. 9 is a diagram of a structure of an electronic device according to an embodiment of this application.

An electronic device 900 includes a memory 910 configured to store computer program instructions and a processor 920 configured to execute the program instructions. When the computer program instructions are executed by the processor, the electronic device is triggered to perform the method steps performed by the mobile device 100 or the mobile phone 200 in this embodiment of this application.

An embodiment of this application further provides an electronic device (for example, a hub device 201). For a structure of the electronic device, refer to FIG. 9. The electronic device includes a memory configured to store computer program instructions and a processor configured to execute the program instructions. When the computer program instructions are executed by the processor, the electronic device is triggered to perform the method steps performed by the hub device 201 in this embodiment of this application.

An embodiment of this application further provides an electronic device (for example, a smart device 202). For a structure of the electronic device, refer to FIG. 9. The electronic device includes a memory configured to store computer program instructions and a processor configured to execute the program instructions. When the computer program instructions are executed by the processor, the electronic device is triggered to perform the method steps performed by the smart device 202 in this embodiment of this application.

Specifically, in an embodiment of this application, one or more computer programs are stored in the memory, the one or more computer programs include instructions, and when the instructions are executed by the device, the device is enabled to perform the method steps in embodiments of this application.

Specifically, in an embodiment of this application, the processor of the electronic device may be a system-on-a-chip SOC, and the processor may include a central processing unit (Central Processing Unit, CPU), or may further include a processor of another type. Specifically, in an embodiment of this application, the processor of the electronic device may be a PWM control chip.

Specifically, in an embodiment of this application, the processor may include, for example, a CPU, a DSP, a microcontroller, or a digital signal processor, and may further include a GPU, an embedded neural-network process unit (Neural-network Process Unit, NPU), and an image signal processor (Image Signal Processor, ISP). The processor may further include a necessary hardware accelerator or a logic processing hardware circuit, for example, an ASIC, or one or more integrated circuits configured to control program execution of the technical solutions in this application. In addition, the processor may have a function of operating one or more software programs, and the software programs may be stored in a storage medium.

Specifically, in an embodiment of this application, the memory of the electronic device may be a read-only memory (read-only memory, ROM) or another type of static storage device that can store static information and instructions, or a random access memory (random access memory, RAM) or another type of dynamic storage device that can store information and instructions. The memory may alternatively be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, or the like), a magnetic disk storage medium or another magnetic storage device, or any computer-readable medium that can be used to carry or store expected program code in a form of an instruction or a data structure and that can be accessed by a computer.

Specifically, in an embodiment of this application, the processor and the memory may be integrated into one processing apparatus, and more commonly, are components independent of each other. The processor is configured to execute program code stored in the memory to implement the method in embodiments of this application. During specific implementation, the memory may alternatively be integrated into the processor, or independent of the processor.

Further, the device, apparatus, and module described in embodiments of this application may be specifically implemented by a computer chip or an entity, or may be implemented by a product with a function.

A person skilled in the art should understand that embodiments of this application may be provided as a method, an apparatus, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media that include computer-usable program code.

In several embodiments provided in this application, when any function is implemented in a form of a software functional unit and sold or used as an independent product, the function may be stored on a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application.

Specifically, an embodiment of this application further provides a computer-readable storage medium. The computer-readable storage medium stores a computer program, and when the computer program is run on a computer, the computer is enabled to perform the method provided in embodiments of this application.

An embodiment of this application further provides a computer program product. The computer program product includes a computer program. When the computer program is run on a computer, the computer is enabled to perform the method provided in embodiments of this application.

Embodiments of this application are described with reference to the flowcharts and/or block diagrams of the method, the device (apparatus), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It should be noted that in embodiments of this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists. A and B may be singular or plural. The character "/" usually indicates an "or" relationship between the associated objects. "At least one of the following" and similar expressions refer to any combination of these terms, including any combination of single or plural terms. For example, at least one of a, b, or c may indicate a, b, c, a and b, a and c, b and c, or a, b, and c, where a, b, and c may be singular or plural.

In embodiments of this application, the term "include" or any other variant thereof is intended to cover a non-exclusive inclusion, so that a process, a method, a commodity, or a device that includes a series of elements not only includes those elements but also includes other elements that are not expressly listed, or further includes elements inherent to such a process, method, commodity, or device. An element preceded by "includes a ..." does not, without more constraints, preclude an existence of additional identical elements in the process, method, commodity, or device that includes the element.

This application can be described in the general context of executable computer instructions executed by a computer, for example, a program module. Generally, the program module includes a routine, program, object, component, data structure, and the like for executing a particular task or implementing a particular abstract data type. This application may be practiced in distributed computing environments in which tasks are performed by remote processing devices that are connected through a communication network. In a distributed computing environment, program modules may be located in both local and remote computer storage media including storage devices.

Embodiments in this application are described in a progressive manner, the same and similar parts between various embodiments can be referred to each other, and each embodiment focuses on differences from other embodiments Especially, an apparatus embodiment is basically similar to a method embodiment, and therefore is described briefly. For related parts, refer to partial description in the method embodiment.

It may be clearly understood by a person skilled in the art that, for the purpose of convenient and brief description, for a detailed working process of the foregoing apparatus and unit, reference may be made to a corresponding process in the foregoing method embodiments, and details are not described herein again.

The foregoing description is merely specific implementations of this application. Any variation or replacement readily figured out by a person skilled in the art within the technical scope disclosed in this application shall fall within the protection scope in embodiments of this application. The protection scope of this application shall be subject to the protection scope of the claims.

## Claims

1. A configuration method, wherein the method is applied to a first smart device, and the method comprises:
obtaining device information of a to-be-configured device that enters a to-be-configured state, wherein the device information comprises description information for obtaining configuration information, and the to-be-configured device that enters the to-be-configured state comprises at least a second smart device;
generating to-be-configured device description information that comprises the device information of the to-be-configured device, wherein the to-be-configured device description information comprises at least device information of the second smart device;
sending the to-be-configured device description information to a mobile device;
receiving the configuration information sent by the mobile device; and
sending the configuration information to the corresponding to-be-configured device.

2. The method according to claim 1, wherein
the obtaining device information of a to-be-configured device that enters a to-be-configured state comprises: establishing a secure communication channel with the second smart device; receiving the device information of the second smart device based on the secure communication channel; and retaining the secure communication channel after the device information of the second smart device is received; and
the sending the configuration information to the corresponding to-be-configured device comprises: sending, to the second smart device based on the secure communication channel, configuration information corresponding to the second smart device.

3. The method according to claim 2, wherein after the device information of the second smart device is received, the method further comprises:
when the secure communication channel is disconnected and reconnection to the second smart device fails, deleting the device information of the second smart device from the to-be-configured device description information.

4. The method according to claim 1, wherein before the obtaining device information of a to-be-configured device that enters a to-be-configured state, the method further comprises:
determining the to-be-configured device that enters the to-be-configured state.

5. The method according to claim 4, wherein the determining the to-be-configured device that enters the to-be-configured state comprises:
receiving a broadcast first message, and determining that the second smart device is the to-be-configured device that enters the to-be-configured state, wherein the first message comprises information that the second smart device is the to-be-configured device that enters the to-be-configured state.

6. The method according to claim 4, wherein the determining the to-be-configured device that enters the to-be-configured state comprises:
broadcasting a second message; and
receiving a point-to-point connection request that is sent by the second smart device in response to the second message, and determining that the second smart device is the to-be-configured device that enters the to-be-configured state.

7. The method according to any one of claims 1 to 6, wherein the sending the to-be-configured device description information to a mobile device comprises:
receiving a configuration request sent by the mobile device; and
sending the to-be-configured device description information to the mobile device in response to the configuration request.

8. The method according to claim 7, wherein the configuration request comprises a device limitation condition, and the device limitation condition is used to describe a configuration object of the mobile device; and
the sending the to-be-configured device description information to the mobile device for configuration in response to the configuration request comprises:
selecting, from the to-be-configured device description information, device information of a to-be-configured device that meets the device limitation condition; and
sending, to the mobile device, the device information of the to-be-configured device that meets the device limitation condition.

9. The method according to any one of claims 1 to 8, wherein the device information comprises configuration requirement information, the configuration requirement information indicates specific content of a configuration operation to be performed for the to-be-configured device, and the configuration operation comprises connecting to a router and/or cloud registration.

10. A configuration method, wherein the method is applied to a mobile device, and the method comprises:
obtaining to-be-configured device description information sent by a first smart device, wherein the to-be-configured device description information comprises device information of a to-be-configured device, and the device information comprises description information for obtaining configuration information;
obtaining the configuration information based on the to-be-configured device description information; and
sending the configuration information to the first smart device.

11. The method according to claim 10, wherein the obtaining to-be-configured device description information sent by a first smart device comprises:
sending a configuration request to the first smart device; and
receiving the to-be-configured device description information that is sent by the first smart device in response to the configuration request.

12. The method according to claim 11, wherein the configuration request comprises a device limitation condition, and the device limitation condition is used to describe a configuration object of the mobile device.

13. The method according to claim 10, wherein the obtaining the configuration information based on the to-be-configured device description information comprises:
obtaining configuration information of a to-be-configured device that meets a configuration rule in the to-be-configured device corresponding to the to-be-configured device description information, wherein the configuration rule is used to describe a configuration object of the mobile device.

14. The method according to claim 10, wherein the obtaining the configuration information based on the to-be-configured device description information comprises:
displaying device description of the to-be-configured device corresponding to the to-be-configured device description information to a user;
requesting the user to select one or more to-be-configured devices from the to-be-configured device corresponding to the to-be-configured device description information; and
obtaining configuration information of the to-be-configured devices selected by the user.

15. The method according to any one of claims 10 to 14, wherein the device information comprises configuration requirement information, and the configuration requirement information indicates specific content of a configuration operation to be performed for the to-be-configured device; and
the obtaining the configuration information based on the to-be-configured device description information comprises:
obtaining the configuration information matching the configuration requirement information, wherein the configuration information comprises router information and/or registration information.

16. An electronic device, wherein the electronic device comprises a memory configured to store computer program instructions and a processor configured to execute the computer program instructions, and when the computer program instructions are executed by the processor, the electronic device is triggered to perform the steps of the method according to any one of claims 1 to 9.

17. An electronic device, wherein the electronic device comprises a memory configured to store computer program instructions and a processor configured to execute the computer program instructions, and when the computer program instructions are executed by the processor, the electronic device is triggered to perform the steps of the method according to any one of claims 10 to 15.

18. A computer-readable storage medium, wherein the computer-readable storage medium stores a computer program, and when the computer program is run on a computer, the computer is enabled to perform the method according to any one of claims 1 to 15.
